# FASCICULE DE BREVET EUROPEEN

(11) **EP 3 704 623 B1**
(45) Date de publication et mention de la délivrance du brevet: **08.02.2023**
(21) Numéro de dépôt: 18803562.0
(22) Date de dépôt: 30.10.2018
(51) Int. Cl.: G06K 7/00

(54) **TERMINAL DE PAIEMENT**
ZAHLUNGSENDGERÄT
PAYMENT TERMINAL

(30) Priorité: 31.10.2017 FR 1760304
(43) Date de publication de la demande: 09.09.2020
(73) Titulaire: Ingenico Belgium, 1130 Bruxelles (BE)
(72) Inventeur: NIEUWBORG, Jan, 2610 Wilrijk (BE); WELLENS, Jan, 1030 Schaarbeek (BE)
(74) Mandataire: LLR
(86) Numéro de dépôt international: PCT/EP2018/079766
(87) Numéro de publication internationale: WO 2019/086490

(56) Documents cités:
- CN-U- 204 740 678
- ES-A1- 2 336 186
- US-B1- 9 092 766

## Description

### DOMAINE TECHNIQUE DE L'INVENTION

La présente invention concerne le domaine des dispositifs de lecture de carte électronique et, en particulier, un terminal de paiement.

### ARRIERE-PLAN TECHNOLOGIQUE DE L'INVENTION

Les dispositifs de paiement électroniques sont, comme Internet, les moyens les plus utilisés pour effectuer des transactions. En effet, les transactions ou le paiement sont effectués en utilisant une carte de crédit et la majorité des paiements par carte de crédit sont effectués soit dans les magasins en utilisant un terminal de point de vente où vous insérez ou glissez votre carte de crédit et vous vous identifiez avec un numéro d'identification personnel, PIN, soit sur Internet en utilisant un ordinateur où vous entrez les détails de votre carte de crédit et, dans certains cas, également un code de sécurité.

Il existe de nombreux types différents de dispositifs de paiement électroniques, mais la plupart d'entre eux ont des fonctionnalités qui sont limitées à la seule validation de transactions, en dépit du développement de la technologie numérique. Le document US 9 092 766 B1, par exemple, divulgue un terminal de paiement dont le boîtier possède une extension formant un angle compris entre 30° et 50° avec la face plane supérieure du boîtier, l'extension recevant un lecteur de carte sans contact, le terminal comprend également un lecteur de carte à piste magnétique et un lecteur de carte à puce à contact.

### DESCRIPTION GENERALE DE L'INVENTION

La présente invention a pour objet d'éviter certains inconvénients de l'art antérieur en offrant des moyens pour garantir les transactions et profiter des avancées de la technologie numérique.

Ce but est atteint par un terminal de paiement avec un boîtier comprenant une face supérieure plane avec une extension à une extrémité formant un angle θ₂ compris entre 30 et 50° avec la face plane pour recevoir un dispositif de lecture sans contact pour lire et communiquer sans contact avec des moyens de paiement sans contact, l'autre extrémité de la face plane comprenant un lecteur de carte à piste magnétique et recevant, dans une fente, située au-dessus du lecteur de carte à piste magnétique et formant un angle *θ*₁ compris entre 30 et 50° avec la face plane, un lecteur de carte à puce à contact, ledit terminal comprenant une carte de circuit principale comprenant au moins un contrôleur, au moins une mémoire pour mémoriser des données et/ou des programmes, ledit contrôleur comprenant au moins un processeur pour exécuter lesdits programmes lorsqu'il reçoit des instructions de la mémoire du contrôleur afin de contrôler au moins un dispositif d'affichage affichant un clavier virtuel, des moyens de communication par Internet ou par Wi-Fi, et une fonctionnalité de lecture de carte à contact ou sans contact, le terminal étant caractérisé en ce que ladite carte de circuit principale comprend, à une extrémité, un connecteur pour un lecteur de carte à contact orienté avec un angle *θ*₁ compris entre 30 et 50° avec la surface plane de la carte et, à l'autre extrémité, un connecteur flexible pour connecter une antenne filaire pour une fonctionnalité de lecture de moyens de paiement sans contact avec un angle *θ*₂ compris entre 30 et 50° avec la surface plane de la carte.

Selon une autre caractéristique, la mémoire de ladite carte de circuit principale comprend également au moins un programme, dont l'exécution met en oeuvre une fonctionnalité « arborescence matérielle», ladite fonctionnalité permettant l'association d'au moins un ensemble de dispositifs audit terminal, lesdits dispositifs étant commandés par le processeur de ladite carte de circuit principale.

Selon une autre caractéristique, ledit boîtier comprend une face inférieure opposée à la face supérieure plane et comprenant au moins :
- des zones d'appui d'une manière telle que, lorsqu'il est disposé sur un comptoir ou un bureau, l'extension de la face supérieure plane forme un angle de 45° avec la surface du comptoir ou du bureau ;
- une cavité comprenant au moins :
   - un ensemble de prises pour l'enfichage dudit terminal sur un dispositif de charge et/ou une prise électrique au moyen d'un connecteur ;
   - une prise Ethernet pour l'enfichage d'au moins un câble Ethernet ;
   - un ensemble de moyens de retenue pour la fixation dudit terminal sur un support ou la fixation d'au moins un dispositif de charge sur le terminal.

Selon une autre particularité, la cavité de la face inférieure dudit terminal comprend au moins un emplacement pour carte SIM pour la connexion sans fil 4G et/ou 3G dudit terminal de paiementà Internet, un emplacement micro SD pour enregistrer des données et au moins un emplacement pour module d'accès sécurisé (SAM) pour recevoir au moins une carte SAM qui gère l'accès sécurisé à la fonctionnalité dudit terminal de paiement.

Selon une autre particularité, le dispositif d'affichage est un écran tactile interactif pour afficher au moins des informations telles que des icônes ou un bouton et comprenant un clavier virtuel permettant à un utilisateur d'entrer des informations ou d'effectuer la sélection d'une ou de plusieurs icônes pour déclencher une fonctionnalité ou une application.

Selon une autre caractéristique, l'écran tactile interactif comprend au moins un capteur de lumière pour l'adaptation automatique du contraste de l'affichage.

Selon une autre particularité, l'écran tactile interactif comprend au moins un accéléromètre pour l'orientation automatique de l'interface utilisateur en mode paysage ou en mode portrait en fonction de l'orientation du terminal de paiement.

Selon une autre particularité, la face supérieure plane comprend au moins :
- une caméra pour enregistrer des événements lorsque le terminal est utilisé, lesdits événements étant mémorisés dans la mémoire dudit terminal ;
- un guide lumineux situé au-dessous de l'écran et à proximité du bord de l'extension de ladite face plane pour la détection de la carte sans contact.

Selon une autre particularité, la caméra commence à enregistrer les événements lorsqu'un utilisateur interagit avec l'écran (14) dudit terminal de paiement, la fonctionnalité d'enregistrement de la caméra étant activée automatiquement.

Selon une autre particularité, la caméra cesse d'enregistrer lorsqu'aucun utilisateur n'interagit avec ledit écran dudit terminal de paiement pendant un temps prédéterminé, la fonctionnalité d'enregistrement étant désactivée automatiquement.

Selon une autre particularité, ladite caméra est adaptée pour lire les étiquettes ou les codes QR comprenant des informations concernant un produit via une fonctionnalité de scannage inclus dans ladite caméra..

Selon une autre particularité, le terminal de paiement comprend une deuxième caméra située à l'extrémité supérieure d'au moins une face latérale du boîtier dudit terminal de paiement ou au niveau de la face inférieure dudit terminal.

Selon une autre particularité, la mémoire du contrôleur comprend au moins un programme, dont l'exécution permet de mettre en oeuvre la fonctionnalité de déclenchement et d'enregistrement de la caméra.

Selon une autre particularité, le boîtier du terminal de paiement comprend également au moins une face latérale comprenant un trou comprenant au moins une prise pour écouteur pour un guidage audio lors de l'enfichage d'un écouteur et un commutateur d'accessibilité pour augmenter au moins le contraste de l'affichage ou la taille de police utilisée.

Selon une autre particularité, l'extrémité de ladite surface plane, comprenant la fente du lecteur de carte à puce, comprend au moins un haut-parleur pour guider un utilisateur.

Selon une autre particularité, le boîtier du terminal de paiement comprend, sur une face latérale opposée à ladite au moins une face latérale comprenant la prise d'écouteur, une fente de sécurité physique pour recevoir au moins un verrou qui empêche le retrait d'un composant dudit terminal de paiement.

Selon une autre particularité, au moins une face latérale du boîtier dudit terminal de paiement comprend au moins un port USB permettant la connexion dudit terminal à au moins un dispositif informatique ou un téléphone intelligent, ledit dispositif informatique comprenant au moins des moyens de communication sans fil pour configurer et communiquer avec le terminal de paiement.

Selon une autre particularité, le terminal de paiement est configuré par ledit dispositif informatique ou transfère au moins des informations et/ou des données associées à un processus de paiement audit dispositif informatique ou vice versa au moyen de la connexion.

Selon une autre particularité, le terminal de paiement est configuré par le dispositif informatique pour au moins :
- gérer les programmes mettant en oeuvre les fonctionnalités dudit terminal et déjà contenues dans la mémoire de la carte de circuit principale ;
- ajouter au moins un ensemble de nouveaux programmes dans ladite mémoire, dont les exécutions permettent la mise en oeuvre d'au moins un ensemble de fonctionnalités supplémentaires aux fonctionnalités précédentes dudit terminal de paiement.

Selon une autre particularité, la face inférieure du terminal de paiement comprend un bouton de réinitialisation pour réinitialiser la configuration du terminal, lorsque ledit terminal ne fonctionne pas correctement, une confirmation de réinitialisation étant demandée sur l'écran dudit terminal, lorsque ledit bouton de réinitialisation est activé, afin d'éviter que la configuration du terminal ne soit réinitialisée automatiquement si ledit bouton de réinitialisation est activé accidentellement.

Selon une autre particularité, le boîtier du terminal de paiement comprend, sur au moins l'une de ses faces latérales, un emplacement pour fixer un stylo tactile, ledit stylo étant utilisé pour interagir avec l'écran dudit terminal de paiement.

Selon une autre particularité, le terminal de paiement comprend des moyens de fixation pour coopérer avec une plaque de fixation orientant la face supérieure plane du terminal d'une manière telle que l'orientation du lecteur de carte à puce est telle que ladite carte forme un angle :
- compris entre 30 et 50° par rapport à l'horizontale, si ledit terminal est disposé sur la plaque de fixation placée sur la surface d'un comptoir ;
- compris entre 30 et 50° par rapport à la verticale, si ledit terminal est disposé sur la plaque de fixation montée contre un mur.

Selon une autre particularité, le terminal de paiement enregistre des informations concernant au moins un produit qu'un client achète habituellement, lesdites informations étant mémorisées dans une base de données sécurisée avec laquelle ledit terminal communique en utilisant ses moyens de communication.

Selon une autre particularité, le terminal de paiement est adapté pour afficher des informations mémorisées dans la base de données sécurisée et associées audit produit lorsqu'un produit acheté par un client est presque en rupture de stock.

Selon une autre particularité, le terminal de paiement est adapté pour se connecter à la base de données sécurisée ou à Internet, par un accès sécurisé, et recherche des informations concernant des produits et leur disponibilité sur les marchés ou dans les centres commerciaux dans le voisinage, lesdites informations étant affichées sur l'écran dudit terminal et suggérées au client.

Selon une autre particularité, le terminal de paiement est adapté pour afficher des publicités correspondant à un centre commercial, à un cinéma, un centre sportif ou n'importe quel autre centre de divertissement lorsqu'il est dans un mode veille.

Selon une autre particularité, le commutateur d'accessibilité du terminal de paiement permet de retirer les publicités affichées sur l'écran du terminal de paiement.

Selon une autre particularité, les moyens de paiement sans contact comprennent au moins une carte à puce ou d'autres dispositifs comprenant un téléphone intelligent ou d'autres dispositifs mobiles.

Un autre objet de la présente invention consiste à proposer une infrastructure pour des transactions.

Ce but est atteint par un système de paiement comprenant un boîtier de connecteurs (ITF) coopérant avec le terminal tel que décrit dans la présente application, ledit boîtier de connecteurs étant configuré pour être logé dans la cavité de la face inférieure dudit terminal et comprenant au moins une prise d'entrée de puissance, un port Ethernet, un port USB et au moins un hôte USB pour permettre audit terminal de paiement de communiquer avec au moins un dispositif configuré sur l'« arborescence matérielle ».

Un autre objet de la présente invention consiste à proposer un dispositif de paiement sécurisé et nomade.

Ce but est atteint par un terminal de paiement portable comprenant un boîtier de batterie coopérant avec ledit terminal (1) de paiement tel que décrit dans la présente application, ledit boîtier étant configuré pour être logé dans la cavité de la face inférieure dudit terminal de paiement et comprenant au moins une batterie, une prise d'entrée d'alimentation et un dispositif micro USB.

### DESCRIPTION DES FIGURES ILLUSTRATIVES

D'autres caractéristiques et avantages de la présente invention apparaîtront plus clairement lors de la lecture de la description qui suit, donnée avec référence aux dessins joints, sur lesquels :
- les figures 1a et 1b sont respectivement des représentations schématiques de la vue en perspective de la face avant du dispositif de paiement selon un mode de réalisation et d'un terminal coopérant avec une plaque de fixation et avec le lecteur de carte à puce et la surface de lecteur de carte sans contact dudit terminal formant respectivement un angle *θ*₁ et *θ*₂ par rapport à la face supérieure plane dudit terminal selon un mode de réalisation ;
- la figure 2 est une représentation schématique d'une vue de profil arrière du dispositif de paiement, selon un mode de réalisation ;
- la figure 3 est une représentation schématique de la face inférieure ou côté arrière du dispositif de paiement selon un mode de réalisation ;
- les figures 4a et 4b sont respectivement des représentations schématiques des sections transversales d'un terminal de paiement comprenant un boîtier de batterie selon un mode de réalisation et d'un boîtier de connecteurs selon un autre mode de réalisation ;
- la figure 5 est une représentation schématique du terminal de paiement coopérant respectivement avec un boîtier de connecteurs ((a) et (b)) selon un mode de réalisation et avec un boîtier de batterie ((c) et (d)), selon un autre mode de réalisation ;
- les figures 6a et 6b et 6c sont des représentations schématiques du terminal de paiement coopérant avec une plaque de fixation selon un mode de réalisation ;
- les figures 7a et 7b sont des représentations schématiques d'un support coopérant avec un terminal de paiement respectivement avec le lecteur de carte à puce situé au niveau du haut dudit support selon un mode de réalisation et avec le lecteur de carte à puce situé au niveau du fond dudit support selon un autre mode de réalisation.

### DESCRIPTION DES MODES DE REALISATION PREFERES DE L'INVENTION

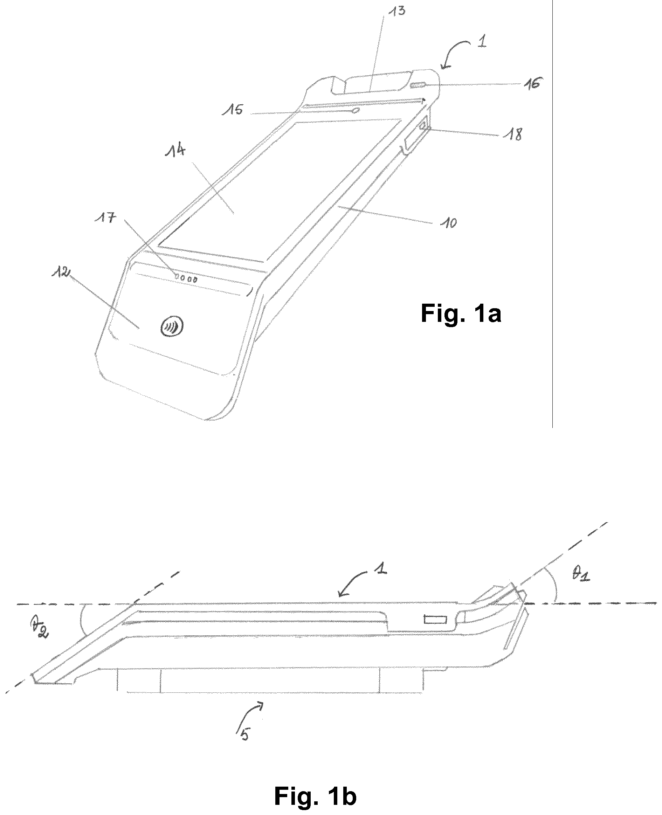

La présente invention concerne un terminal (1, figure 1a) pour le paiement dans une transaction.

Dans certains modes de réalisation, le terminal de paiement (1) comporte un boîtier (10) comprenant une face supérieure plane avec une extension à une extrémité formant un angle *θ*₂ (voir la figure 1b) compris entre 30 et 50° avec la face plane pour recevoir un dispositif de lecture sans contact (121) pour lire et communiquer sans contact avec des moyens de paiement sans contact. De préférence, l'angle *θ*₂ est de 45°. L'autre extrémité de la face plane comprend un lecteur de carte à piste magnétique (11) et reçoit, dans une fente (13), située au-dessus du lecteur de carte à piste magnétique (11) et formant également un angle *θ*₁ compris entre 30 et 50° avec la face plane, un lecteur de carte à puce à contact, ledit terminal (1) comprenant une carte de circuit principale (1030) comprenant au moins un contrôleur, au moins une mémoire pour mémoriser des données et/ou des programmes. Le contrôleur comprend au moins un processeur pour exécuter lesdits programmes lorsqu'il reçoit des instructions de la mémoire du contrôleur afin de contrôler au moins un dispositif d'affichage (14) affichant un clavier virtuel, des moyens de communication par Internet ou par Wi-Fi, et une fonctionnalité de lecture de carte à contact ou sans contact. De préférence, l'angle *θ*₁ du lecteur de carte à contact avec la face plane est de 45° et est identique à celui de l'extension. La carte de circuit principale (1030) du terminal (1) comprend, à une extrémité, un connecteur pour la carte à contact orienté avec un angle *θ*₁ compris entre 30 et 50°, de préférence de 45°, avec la surface plane de la carte et, à l'autre extrémité, un connecteur flexible pour connecter une antenne filaire (120) pour une fonctionnalité de lecture de moyens de paiement sans contact avec un angle *θ*₂ compris entre 30 et 50°, de préférence de 45°, avec la surface plane de la carte.

Dans certains modes de réalisation, le dispositif d'affichage (14, figure 1a) est un écran tactile interactif (14) pour afficher au moins des informations telles que des icônes ou un bouton et comprenant un clavier virtuel permettant à un utilisateur d'entrer des informations ou d'effectuer la sélection d'une ou de plusieurs icônes pour déclencher une fonctionnalité ou une application.

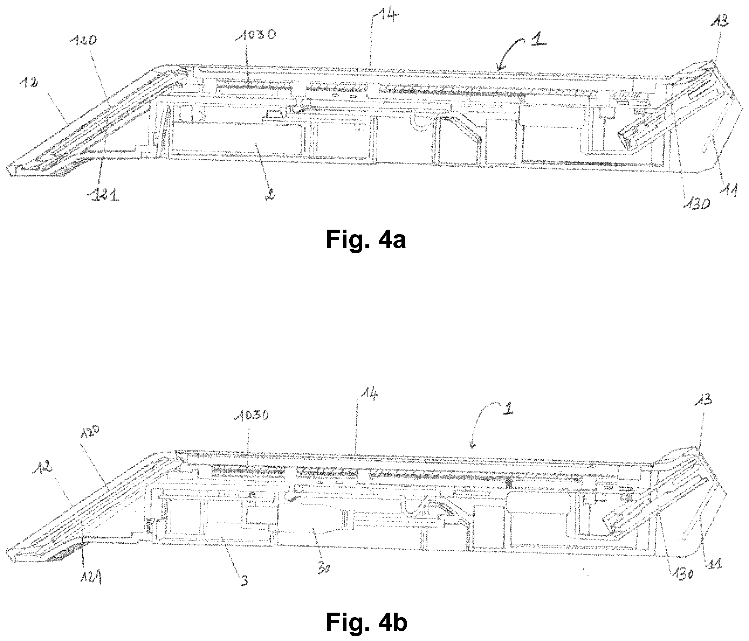

L'expression « dispositif de lecture sans contact » (121, voir par exemple les figures 4a et 4b) (moyens de paiement) désigne n'importe quel dispositif de lecture (moyens de paiement) qui ne nécessite pas de contact direct avec les moyens de paiement (dispositif de lecture) afin de communiquer au moins des informations au moyen de la technologie RFID (Radio-Frequency Identification) ou NFC (Near Field Communication) pour effectuer des paiements sécurisés.

On devrait comprendre que l'expression « moyens de paiement sans contact » fait référence à une carte à puce (carte de crédit, de débit ou intelligente) ou à d'autres dispositifs comprenant un téléphone intelligent et d'autres dispositifs mobiles.

Dans certains modes de réalisation, la mémoire de ladite carte de circuit principale (1030 ; figures 4a et 4b) comprend également au moins un programme, dont l'exécution met en oeuvre une fonctionnalité « arborescence matérielle », ladite fonctionnalité permettant l'association d'au moins un ensemble de dispositifs audit terminal (1), lesdits dispositifs étant commandés par le processeur de ladite carte de circuit principale (1030). Les dispositifs gérés par « l'arborescence matérielle» peuvent être, par exemple et sans limitation, un ordinateur, un téléphone mobile ou un dispositif USB. « L'arborescence matérielle » peut être configurée au moyen d'un programme afin de permettre à davantage de dispositifs ou de matériels d'interagir avec ledit terminal de paiement (1). Dans certains modes de réalisation, la carte de circuit principale (1030) peut également comprendre au moins un module Bluetooth, par exemple et sans limitation, un module BLE 4.2, pour la connexion dudit terminal (1) à un autre terminal ou à un dispositif comprenant la technologie Bluetooth. Lesdits moyens de communication sans fil peuvent être utilisés pour échanger des données par exemple.

Dans certains modes de réalisation, le terminal comprend un programme ou logiciel d'authentification/autorisation pour configurer de manière sécurisé l'« arborescence matérielle » de sorte que ladite « arborescence matérielle » bloque l'accès à tous dispositifs ou matériels ne figurant pas sur une liste mémorisée de dispositifs ou matériels autorisés à interagir avec ledit terminal. Le terminal peut comprendre une alarme pour émettre un signal lorsqu'un dispositif non autorisé n'est pas reconnu par l'« arborescence matérielle »

Dans certains modes de réalisation, le terminal peut comprendre un programme dont l'exécution sur son processeur permet de mettre en oeuvre un procédé de sécurisation du terminal (1) de paiement lorsque ce dernier doit interagir avec un dispositif externe (par exemple un ordinateur, une tablette), ledit procédé comprenant au moins:
- envoi d'une demande d'authentification au dispositif externe et;
   - si le dispositif externe ne possède pas d'autorisation ou ne répond pas à la demande d'authentification activation d'une alarme pour émettre un signal sonore et blocage de l'accès au terminal
   - si non, vérification de l'information d'authentification envoyé par le dispositif externe sur une liste mémorisé de dispositifs autorisés à se connecter au terminal et;
      - si le dispositif est répertorié sur la liste, autorisation de l'accès
      - si non, activation d'une alarme pour émettre un signal sonore et blocage de l'accès au terminal.

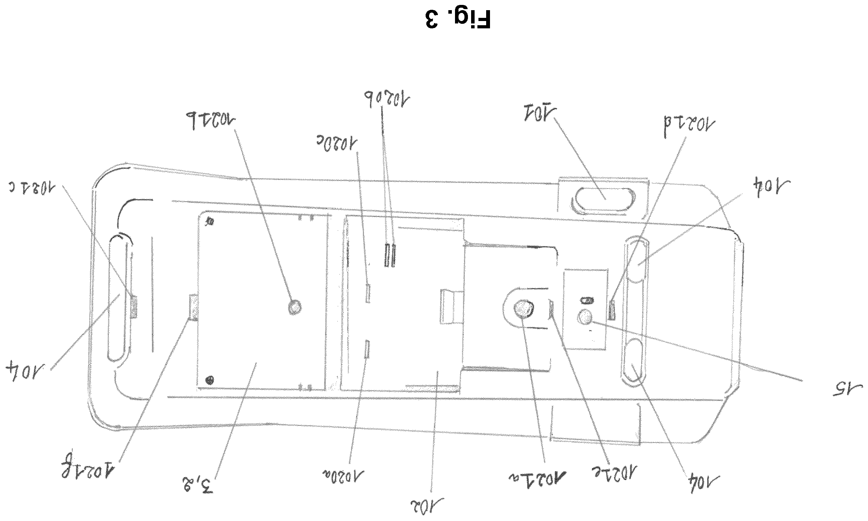

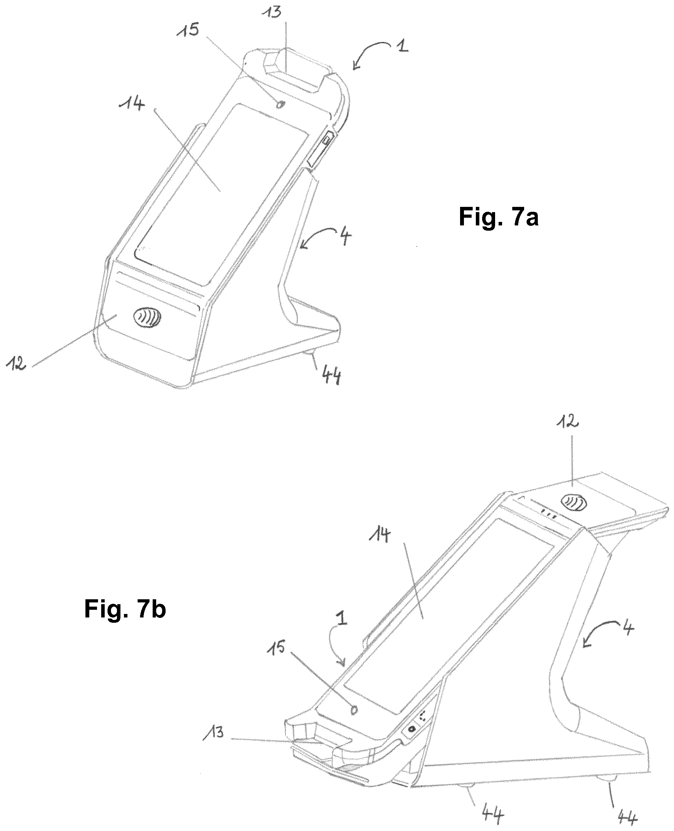

Dans certains modes de réalisation, le boîtier (10) du terminal de paiement (1) comprend une face inférieure opposée à la face supérieure plane comme montré sur la figure 3. Ladite face inférieure comprend au moins :
- . des zones d'appui (104) d'une manière telle que, lorsqu'il est disposé sur un comptoir ou un bureau, l'extension de la face supérieure plane forme un angle *θ*₂ compris entre 30 et 50° avec la surface du comptoir ou du bureau, de préférence de 45°;
- . une cavité (102) comprenant au moins :
   - un ensemble de prises pour l'enfichage dudit terminal (1) sur un dispositif de charge et/ou une prise électrique au moyen d'un connecteur;
   - une prise Ethernet pour l'enfichage d'au moins un câble Ethernet ;
   - un ensemble de moyens de retenue (1021a, 1021b, 1021c, 1021d, 1021e, 1021f) pour la fixation dudit terminal (1) sur un support (4, voir par exemple la figure 7a sur laquelle le lecteur de carte à puce est orienté vers le haut et la figure 7b sur laquelle ledit lecteur de carte à puce est orienté vers le bas) ou la fixation d'au moins un dispositif de charge sur le terminal.

Dans certains modes de réalisation, la cavité (102) de la face inférieure dudit terminal comprend au moins un emplacement pour carte SIM (1020c) pour la connexion sans fil 4G et/ou 3G dudit terminal de paiement à Internet, un emplacement micro SD (1020a) pour enregistrer des données et au moins un emplacement pour module d'accès sécurisé (SAM) (1020b) pour recevoir au moins une carte SAM qui gère l'accès sécurisé à la fonctionnalité dudit terminal de paiement. Dans certains modes de réalisation, la carte SAM est intégrée dans la carte de circuit principale (1030).

La carte SAM peut être soit une carte SIM et être enfichée dans l'emplacement pour carte SAM, soit un circuit intégré fixe dans un logement directement soudé sur la carte de circuit principale. La carte SAM gère toute la gestion et la cryptographie de clés d'une manière sécurisée. Les cartes SAM peuvent être utilisées au moins :
- . pour générer des clés d'application sur la base de clés maîtres ;
- . pour mémoriser et sécuriser des clés maîtres ;
- . pour effectuer des fonctions cryptographiques avec des cartes à puce ;
- . en tant que dispositif de chiffrement sécurisé ;
- . pour effectuer une authentification mutuelle ;
- . pour générer des clés de session ;
- . pour effectuer l'échange sécurisé de messages ;

Dans certains modes de réalisation, l'ensemble de moyens de retenue comprend au moins des lèvres de fixation souples.

Dans certains modes de réalisation, la face supérieure plane dudit terminal de paiement(1) comprend au moins :
- . une caméra (15, figure 1a) pour enregistrer des événements lorsque le terminal (1) est utilisé, lesdits événements étant mémorisés dans la mémoire dudit terminal (1) ;
- . un guide lumineux (17) situé au-dessous de l'écran et à proximité du bord de l'extension de ladite face plane pour la détection de la carte sans contact.

Les informations affichées par l'écran tactile interactif peuvent être, par exemple et sans limitation, le montant d'une transaction donnée effectuée par l'utilisateur, un ensemble d'instructions pour réaliser lesdites transactions telles que par exemple « Entrez votre mot de passe », etc.

Dans certains modes de réalisation, le dispositif d'affichage (14) ou l'écran tactile interactif comprend au moins un capteur de lumière pour l'adaptation automatique du contraste de l'affichage.

Dans certains modes de réalisation, le dispositif d'affichage (14) ou l'écran tactile interactif comprend au moins un accéléromètre pour l'orientation automatique de l'interface utilisateur en mode paysage ou en mode portrait en fonction de l'orientation du terminal de paiement (1).

La caméra (15) est, de préférence, située dans la partie supérieure dudit écran tactile interactif. De manière avantageuse, les événements enregistrés peuvent être utilisés pour sécuriser les transactions ou pour empêcher des actions frauduleuses. Dans certains modes de réalisation, les événements enregistrés par la caméra (15) et associés à une carte de paiement donnée peuvent être mémorisés dans une mémoire ou un serveur, en utilisant les moyens de communication, avec au moins un numéro d'identification permettant de lier ladite carte auxdits événements. Lorsqu'une tentative de fraude a lieu avec ladite carte de paiement, c'est-à-dire, par exemple et sans limitation, un mauvais mot de passe entré plus d'un nombre prédéterminé de fois ou un montant supérieur à une valeur de seuil journalière, ce dernier événement peut être comparé à des événements précédents, associés à ladite carte, dans lesquels les transactions ont été effectuées avec succès, afin de contrôler, par exemple, que le ou les utilisateurs sont les mêmes et qu'aucune autre personne n'utilise ladite carte de paiement.

Dans certains modes de réalisation, l'enregistrement d'événements par la caméra (15) est déclenché lorsqu'un utilisateur interagit avec l'écran (14) dudit terminal de paiement (1). En effet, lorsqu'un utilisateur interagit avec ledit terminal de paiement (1), la fonctionnalité d'enregistrement de la caméra (15) est activée automatiquement et ladite caméra (15) débute l'enregistrement des événements. Lorsqu'aucun utilisateur n'interagit avec ledit écran (14) dudit terminal de paiement (1) pendant un temps prédéterminé, ladite fonctionnalité d'enregistrement est désactivée automatiquement.

Dans certains modes de réalisation, la fonctionnalité de déclenchement et d'enregistrement de la caméra (15) est mise en oeuvre par l'exécution, sur ledit processeur, d'au moins un programme inclus dans la mémoire du contrôleur.

Dans certains modes de réalisation, la caméra (15) est adaptée pour lire les étiquettes ou les codes QR comprenant des informations concernant un produit via une fonctionnalité de scannage inclus dans ladite caméra (15).

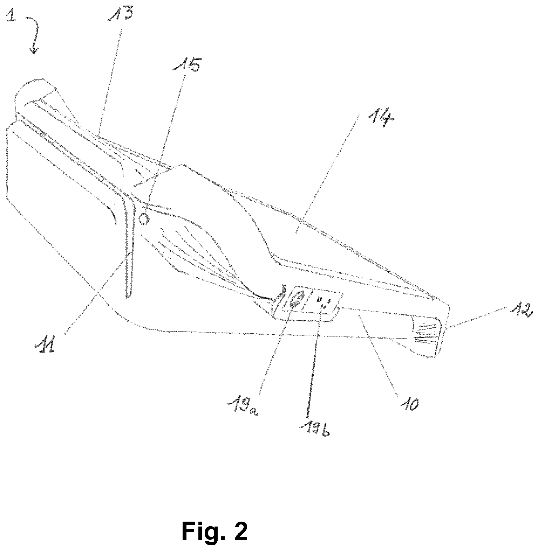

Dans certains modes de réalisation, le terminal de paiement comprend une deuxième caméra (15) située à l'extrémité supérieure d'au moins une face latérale du boîtier (10) dudit terminal de paiement (1) comme illustré sur la figure 2. Dans certains modes de réalisation, la deuxième caméra peut être située au niveau de la face inférieure dudit terminal comme montré sur la figure 3.

Dans certains modes de réalisation, le boîtier (10) du terminal de paiement (1) comprend également au moins une face latérale comprenant un trou comprenant au moins une prise pour écouteur (19a, figure 2) pour un guidage audio lors de l'enfichage d'un écouteur et un commutateur d'accessibilité (19b) pour augmenter au moins le contraste de l'affichage ou la taille de police utilisée. Dans certains modes de réalisation, la prise pour écouteur peut être utilisée pour le guidage audio des personnes malvoyantes. Le commutateur d'accessibilité, d'un autre côté, peut être utilisé pour augmenter le contraste de l'affichage pour les personnes malvoyantes.

Dans certains modes de réalisation, l'extrémité de ladite surface plane, comprenant l'emplacement de lecteur de carte à puce (13), comprend au moins un haut-parleur (16, figure 1a) pour guider un utilisateur.

Dans certains modes de réalisation, le boîtier (10) du terminal de paiement (1) comprend, sur une face latérale opposée à ladite au moins une face latérale comprenant la prise d'écouteur, une fente de sécurité physique (18, figure 1a) pour recevoir au moins un verrou qui empêche le retrait d'un composant dudit terminal de paiement (1). Par exemple et sans limitation, la fente de sécurité physique (18) est une fente de type Kensington.

Dans certains modes de réalisation, le terminal comprend un bouton de mise sous tension situé à proximité de la fente de sécurité (18).

Dans certains modes de réalisation, au moins une face latérale du boîtier (10) dudit terminal de paiement (1) comprend au moins un port USB permettant la connexion dudit terminal (1) à au moins un dispositif informatique ou un téléphone intelligent (smartphone).

La connexion dudit terminal de paiement (1) à un dispositif informatique permet la configuration dudit terminal (1) ou le transfert au moins d'informations et/ou de données associées, par exemple, à un processus de paiement audit dispositif informatique ou vice versa. Dans certains modes de réalisation, la configuration du terminal de paiement (1) par le dispositif informatique comprend au moins :
- la gestion des programmes mettant en oeuvre les fonctionnalités dudit terminal (1) et déjà contenus dans la mémoire de la carte de circuit principale (1030, figures 4a et 4b) ;
- l'ajout d'au moins un ensemble de nouveaux programmes dans ladite mémoire, dont les exécutions permettent la mise en oeuvre d'au moins un ensemble de fonctionnalités supplémentaires aux fonctionnalités précédentes dudit terminal de paiement (1).

Dans certains modes de réalisation, la configuration du terminal de paiement (1) par le dispositif informatique et/ou le transfert d'informations entre ledit dispositif informatique et le terminal (1) peuvent être effectués sans utiliser de connexion USB. Dans ce cas, le dispositif informatique comprend au moins des moyens de communication tels que, par exemple, Wi-Fi ou RFID ou NFC pour communiquer avec le terminal de paiement (1).

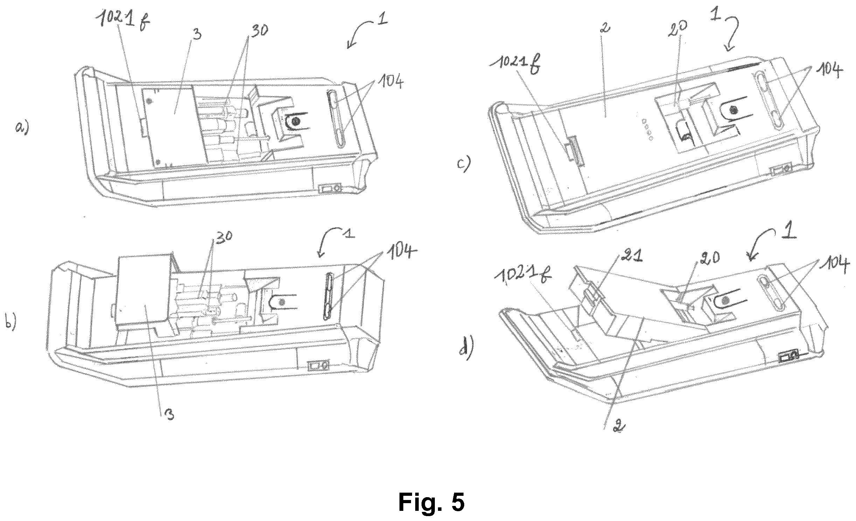

Dans certains modes de réalisation, le terminal de paiement (1) peut coopérer avec un boîtier de connecteurs (3, figures 4b, 5 (a) et (b) par exemple) (ITF), ledit boîtier de connecteurs (3) étant configuré pour être logé dans la cavité (102) de la face inférieure dudit terminal (1) et comprenant au moins un ensemble de connecteurs (30), une prise d'entrée d'alimentation, un port Ethernet, par exemple et sans limitation, un port d'alimentation par câble Ethernet (PoE), un dispositif USB et au moins un hôte USB pour permettre audit terminal de paiement(1) de communiquer avec au moins un dispositif configuré sur l'«arborescence matérielle », par exemple et sans limitation, un ordinateur ou un téléphone intelligent. Dans certains modes de réalisation, le boîtier de connecteurs peut comprendre un port de communication série permettant la connexion du terminal à un dispositif informatique. Par exemple et sans limitation, le port de communication peut être un port de communication série RS-232.

Dans certains modes de réalisation, le terminal de paiement (1) peut coopérer avec un boîtier de batterie (2, figures 4a, 5 (c) et (d) par exemple), ledit boîtier de batterie (2) étant configuré pour être logé dans la cavité (102) de la face inférieure dudit terminal de paiement (1). Le boîtier de batterie (2) comprend au moins une batterie, une prise d'entrée d'alimentation et un dispositif micro USB, et forme, avec ledit terminal de paiement (1), un terminal portable (1). Le terminal de paiement est chargé au moyen de la prise d'entrée d'alimentation.

La cavité (102) de la face inférieure du terminal de paiement (1) peut comprendre au moins des moyens de fixation souples situés au niveau du bord de ladite cavité (102) afin de retenir ledit boîtier de connecteurs (3) ou ledit boîtier de batterie (2) dans la cavité (102).

Dans certains modes de réalisation, la face inférieure du terminal de paiement comprend un bouton de réinitialisation (101, figure 3) pour permettre la réinitialisation de la configuration du terminal (1), lorsque ledit terminal ne fonctionne pas correctement. Dans certains modes de réalisation, lorsque ledit bouton de réinitialisation (101) est activé, une confirmation de réinitialisation est demandée sur l'écran (14) dudit terminal afin d'éviter que la configuration du terminal ne soit réinitialisée automatiquement si ledit bouton de réinitialisation (101) est activé accidentellement.

Dans certains modes de réalisation, le boîtier (10) du terminal de paiement (1) comprend, sur au moins l'une de ses faces latérales, un emplacement pour fixer un stylo tactile, ledit stylo étant utilisé pour interagir avec l'écran dudit terminal de paiement (1).

Dans certains modes de réalisation, le boîtier (10) du terminal de paiement (1) est conçu d'une manière telle que, lors d'une chute, aucun contact direct n'est possible entre la lentille supérieure (caméra) de l'écran (14) et la surface sur laquelle le terminal tombe. En effet, l'extrémité supérieure du logement a une forme convexe avec une hauteur finie au-dessus de la surface plane contenant la lentille (caméra), d'une manière telle que, lorsqu'il tombe, l'extrémité avec la forme convexe empêche que la face plane, et ainsi la lentille, ne soient en contact avec la surface sur laquelle le terminal tombe. Dans certains modes de réalisation, la forme du terminal, particulièrement au niveau du lecteur de carte à puce et du lecteur de carte à piste magnétique ou de carte magnétique sur le dessus et au niveau de la surface de lecteur de carte sans contact sur le dessous permet d'absorber les chocs lorsque ledit terminal tombe sur le sol.

Dans certains modes de réalisation, le terminal de paiement comprend des moyens de fixation pour coopérer avec une plaque de fixation (5) orientant la face supérieure plane du terminal (1) d'une manière telle que l'orientation du lecteur de carte à puce (130) est telle que ladite carte forme un angle θ₁ :
- compris entre 30 et 50° par rapport à l'horizontale, de préférence de 45°, si ledit terminal (1) est disposé sur la plaque de fixation (5) placée sur la surface d'un comptoir ;
- compris entre 30 et 50°, de préférence de 45°, par rapport à la verticale, si ledit terminal (1) est disposé sur la plaque de fixation (5) montée contre un mur.

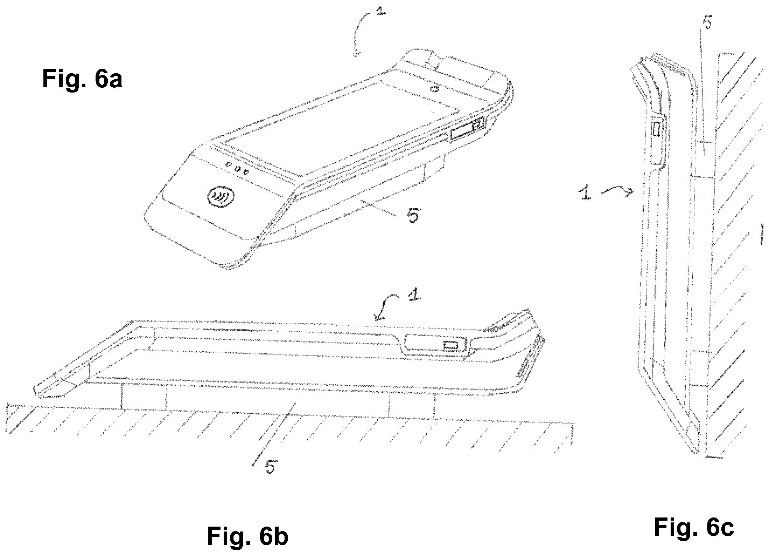

Dans certains modes de réalisation, le terminal de paiement comprend des moyens de fixation pour coopérer avec une plaque de fixation (5, voir par exemple les figures 6a, 6b et 6c) orientant ledit terminal d'une manière telle que, lorsque ladite plaque de fixation est montée contre un mur, le lecteur de carte à puce peut être orienté vers le haut ou vers le bas.

Dans certains modes de réalisation, le terminal de paiement peut également être fixé sur un support d'une manière telle que le lecteur de carte à puce peut être orienté vers le haut ou vers le bas (voir les figures 7a et 7b).

Dans certains modes de réalisation, le terminal de paiement (1) est adapté ou configuré, au moyen d'un algorithme mémorisé, pour enregistrer des informations concernant au moins un produit qu'un client achète habituellement, lesdites informations étant mémorisées dans une base de données sécurisée avec laquelle ledit terminal (1) communique en utilisant ses moyens de communication, par exemple et sans limitation, le Wi-Fi ou Ethernet. Dans certains modes de réalisation, lorsqu'un produit acheté par un client est presque en rupture de stock, ledit terminal (1) est adapté ou configuré, au moyen d'un algorithme mémorisé, pour afficher des informations mémorisées dans la base de données sécurisée et associées audit produit, lesdites informations comprenant au moins la date de rupture de stock probable, la date du prochain approvisionnement dudit produit, ou peuvent également suggérer un autre produit similaire au produit que ledit client souhaite acheter. Dans certains modes de réalisation, le terminal (1) est adapté ou configuré, au moyen d'un algorithme mémorisé, pour se connecter à la base de données sécurisée ou à Internet, par un accès sécurisé, et rechercher des informations concernant lesdits produits et leur disponibilité sur les marchés ou dans les centres commerciaux dans le voisinage. Lesdites informations sont ainsi affichées sur l'écran (14) dudit terminal (1) et suggérées au client.

Dans certains modes de réalisation, lorsque le terminal de paiement (1) est dans un mode veille, c'est-à-dire lorsque personne ne l'utilise, ledit dispositif de terminal (1) est adapté ou configuré, au moyen d'un algorithme mémorisé, pour afficher une publicité correspondant à un centre commercial, à un cinéma, un centre sportif ou n'importe quel autre centre de divertissement.

Dans certains modes de réalisation, le commutateur d'accessibilité (19b) du terminal de paiement peut permettre de retirer les publicités affichées sur l'écran (14) du terminal de paiement (1).

L'homme de métier comprendra que la présente demande porte préférentiellement sur un système comprenant les objets suivants :
- boîtier de batterie (2)
- boîtier de connecteurs (3)
- programme d'une « arborescence matérielle » et/ou logiciel d'autorisation/authentification des dispositifs ci-dessus

De plus l'invention peut bien entendu s'étendre à chacun de ces objets individuellement.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

## Revendications

1. Terminal de paiement (1) avec un boîtier (10) comprenant une face supérieure plane avec une extension à une extrémité (12) formant un angle θ₂ compris entre 30 et 50° avec la face plane pour recevoir un dispositif de lecture sans contact (121) pour lire et communiquer sans contact avec des moyens de paiement sans contact, l'autre extrémité de la face plane comprenant un lecteur de carte à piste magnétique (11) et recevant, dans une fente (13), située au-dessus du lecteur de carte à piste magnétique (11) et formant un angle θ₁ compris entre 30 et 50° avec la face plane, un lecteur de carte à puce à contact (130), ledit terminal (1) comprenant une carte de circuit principale (1030) comprenant au moins un contrôleur, au moins une mémoire pour mémoriser des données et/ou des programmes, ledit contrôleur comprenant au moins un processeur pour exécuter lesdits programmes lorsqu'il reçoit des instructions de la mémoire du contrôleur afin de contrôler au moins un dispositif d'affichage (14) affichant un clavier virtuel, des moyens de communication par Internet ou par Wi-Fi, et une fonctionnalité de lecture de carte à contact ou sans contact, le terminal (1) étant **caractérisé en ce que** ladite carte de circuit principale (1030) comprend, à une extrémité, un connecteur pour un lecteur de carte à contact orienté avec un angle *θ*₁ compris entre 30 et 50° avec la surface plane de la carte et, à l'autre extrémité, un connecteur flexible pour connecter une antenne filaire (120) pour une fonctionnalité de lecture de moyens de paiement sans contact avec un angle *θ*₂ compris entre 30 et 50° avec la surface plane de la carte.

2. Terminal de paiement (1) selon la revendication 1, **caractérisé en ce que** la mémoire de ladite carte de circuit principale (1030) comprend également au moins un programme, dont l'exécution met en oeuvre une fonctionnalité « arborescence matérielle », ladite fonctionnalité permettant l'association d'au moins un ensemble de dispositifs audit terminal (1), lesdits dispositifs étant commandés par le processeur de ladite carte de circuit principale (1030).

3. Terminal de paiement (1) selon la revendication 1, **caractérisé en ce que** ledit boîtier (10) comprend une face inférieure opposée à la face supérieure plane et comprenant au moins :
• des zones d'appui (104) d'une manière telle que, lorsqu'il est disposé sur un comptoir ou un bureau, l'extension de la face supérieure plane forme un angle *θ*₂ compris entre 30 et 50° avec la surface du comptoir ou du bureau ;
• une cavité (102) comprenant au moins :
- un ensemble de prises pour l'enfichage dudit terminal (1) sur un dispositif de charge et/ou une prise électrique au moyen d'un connecteur ;
- une prise Ethernet pour l'enfichage d'au moins un câble Ethernet (1020) ;
- un ensemble de moyens de retenue (1021a, 1021b, 1021c, 1021d, 1021e, 1021f) pour la fixation dudit terminal (1) sur un support (4) ou la fixation d'au moins un dispositif de charge sur le terminal.

4. Terminal de paiement (1) selon la revendication 3, **caractérisé en ce que** la cavité (102) de la face inférieure dudit terminal comprend au moins un emplacement pour carte SIM (1020c) pour la connexion sans fil 4G et/ou 3G dudit terminal de paiement à Internet, un emplacement micro SD (1020a) pour enregistrer des données et au moins un emplacement pour module d'accès sécurisé (SAM) (1020b) pour recevoir au moins une carte SAM qui gère l'accès sécurisé à la fonctionnalité dudit terminal de paiement (1).

5. Terminal de paiement (1) selon la revendication 1, **caractérisé en ce que** le dispositif d'affichage (14) est un écran tactile interactif (14) pour afficher au moins des informations telles que des icônes ou un bouton et comprenant un clavier virtuel permettant à un utilisateur d'entrer des informations ou d'effectuer la sélection d'une ou de plusieurs icônes pour déclencher une fonctionnalité ou une application.

6. Terminal de paiement (1) selon la revendication 5, **caractérisé en ce que** l'écran tactile interactif (14) comprend au moins un capteur de lumière pour l'adaptation automatique du contraste de l'affichage.

7. Terminal de paiement (1) selon la revendication 5, **caractérisé en ce que** l'écran tactile interactif (14) comprend au moins un accéléromètre pour l'orientation automatique de l'interface utilisateur en mode paysage ou en mode portrait en fonction de l'orientation du terminal de paiement (1).

8. Terminal de paiement (1) selon la revendication 1, **caractérisé en ce que** la face supérieure plane comprend au moins :
• . une caméra (15) pour enregistrer des événements lorsque le terminal (1) est utilisé, lesdits événements étant mémorisés dans la mémoire dudit terminal (1) ;
• . un guide lumineux (17) situé au-dessous de l'écran (14) et à proximité du bord de l'extension de ladite face plane pour la détection de la carte sans contact.

9. Terminal de paiement (1) selon la revendication 8, **caractérisé en ce que** la caméra (15) est adaptée pour commencer l'enregistrement des événements lorsqu'un utilisateur interagit avec l'écran (14) dudit terminal de paiement (1), la fonctionnalité d'enregistrement de la caméra (15) étant activée automatiquement.

10. Terminal de paiement (1) selon les revendications 8 et 9, **caractérisé en ce que** la caméra (15) est adaptée pour cesser l'enregistrement lorsqu'aucun utilisateur n'interagit avec ledit écran (14) dudit terminal de paiement (1) pendant un temps prédéterminé, la fonctionnalité d'enregistrement étant désactivée automatiquement.

11. Terminal de paiement (1) selon les revendications 8 à 10, **caractérisé en ce que** ladite caméra (15) est adaptée pour lire les étiquettes ou les codes QR comprenant des informations concernant un produit via une fonctionnalité de scannage inclus dans ladite caméra (15).

12. Terminal de paiement (1) selon la revendication 8, **caractérisé en ce qu'**il comprend une deuxième caméra située à l'extrémité supérieure d'au moins une face latérale du boîtier (10) dudit terminal de paiement (1) ou au niveau de la face inférieure dudit terminal (1).

13. Terminal de paiement (1) selon les revendications 8 à 12, **caractérisé en ce que** la mémoire du contrôleur comprend au moins un programme, dont l'exécution permet de mettre en oeuvre la fonctionnalité de déclenchement et d'enregistrement de la caméra (15).

14. Terminal de paiement (1) selon les revendications 1 à 13, **caractérisé en ce que** le boîtier (10) du terminal de paiement (1) comprend également au moins une face latérale comprenant un trou comprenant au moins une prise pour écouteur (19a) pour un guidage audio lors de l'enfichage d'un écouteur et un commutateur d'accessibilité (19b) pour augmenter au moins le contraste de l'affichage ou la taille de police utilisée.

15. Terminal de paiement (1) selon la revendication 1, **caractérisé en ce que** l'extrémité de ladite surface plane, comprenant la fente (13) du lecteur de carte à puce, comprend au moins un haut-parleur (16) pour guider un utilisateur.

16. Terminal de paiement (1) selon la revendication 14, **caractérisé en ce que** le boîtier (10) du terminal de paiement (1) comprend, sur une face latérale opposée à ladite au moins une face latérale comprenant la prise d'écouteur, une fente de sécurité physique (18) pour recevoir au moins un verrou qui empêche le retrait d'un composant dudit terminal de paiement (1).

17. Terminal de paiement (1) selon la revendication 1, **caractérisé en ce qu'**au moins une face latérale du boîtier (10) dudit terminal de paiement (1) comprend au moins un port USB permettant la connexion dudit terminal (1) à au moins un dispositif informatique ou un téléphone intelligent, ledit dispositif informatique comprenant au moins des moyens de communication sans fil pour configurer et communiquer avec le terminal de paiement (1).

18. Terminal de paiement (1) selon la revendication 17, **caractérisé en ce qu'**il est configuré par ledit dispositif informatique ou transfère au moins des informations et/ou des données associées à un processus de paiement audit dispositif informatique ou vice versa au moyen de la connexion.

19. Terminal de paiement (1) selon les revendications 17 et 18, **caractérisé en ce qu'**il est configuré par le dispositif informatique pour au moins :
• gérer les programmes mettant en oeuvre les fonctionnalités dudit terminal (1) et déjà contenues dans la mémoire de la carte de circuit principale (1030) ;
• ajouter au moins un ensemble de nouveaux programmes dans ladite mémoire, dont les exécutions permettent la mise en oeuvre d'au moins un ensemble de fonctionnalités supplémentaires aux fonctionnalités précédentes dudit terminal de paiement (1).

20. Terminal de paiement(1) selon la revendication 1, **caractérisé en ce que** la face inférieure du terminal de paiement comprend un bouton de réinitialisation (101) pour réinitialiser la configuration du terminal (1), lorsque ledit terminal ne fonctionne pas correctement, une confirmation de réinitialisation étant demandée sur l'écran (14) dudit terminal, lorsque ledit bouton de réinitialisation (101) est activé, afin d'éviter que la configuration du terminal ne soit réinitialisée automatiquement si ledit bouton de réinitialisation (101) est activé accidentellement.

21. Terminal de paiement selon la revendication 1, **caractérisé en ce que** le boîtier (10) du terminal de paiement (1) comprend, sur au moins l'une de ses faces latérales, un emplacement pour fixer un stylo tactile, ledit stylo étant utilisé pour interagir avec l'écran dudit terminal de paiement (1).

22. Terminal de paiement selon la revendication 1, **caractérisé en ce qu'**il comprend des moyens de fixation pour coopérer avec une plaque de fixation orientant la face supérieure plane du terminal (1) d'une manière telle que l'orientation du lecteur de carte à puce (130) est telle que ladite carte forme un angle *θ*₁ :
• compris entre 30 et 50° par rapport à l'horizontale, si ledit terminal (1) est disposé sur la plaque de fixation (5) placée sur la surface d'un comptoir ;
• compris entre 30 et 50° par rapport à la verticale, si ledit terminal (1) est disposé sur la plaque de fixation (5) montée contre un mur.

23. Terminal de paiement (1) selon les revendications 1 à 22, **caractérisé en ce qu'**il est adapté pour enregistrer des informations concernant au moins un produit qu'un client achète habituellement, lesdites informations étant mémorisées dans une base de données sécurisée avec laquelle ledit terminal (1) communique en utilisant ses moyens de communication.

24. Terminal de paiement (1) selon les revendications 1 à 23, **caractérisé en ce qu'**il est adapté pour afficher des informations mémorisées dans la base de données sécurisée et associées à un produit lorsque ledit produit acheté par un client est presque en rupture de stock.

25. Terminal de paiement (1) selon les revendications 1 à 24, **caractérisé en ce qu'**il est adapté pour se connecter à la base de données sécurisée ou à Internet, par un accès sécurisé, et rechercher des informations concernant des produits et leur disponibilité sur les marchés ou dans les centres commerciaux dans le voisinage, lesdites informations étant affichées sur l'écran (14) dudit terminal (1) et suggérées au client.

26. Terminal de paiement (1) selon les revendications 1 à 25, **caractérisé en ce qu'**il est adapté pour afficher des publicités correspondant à un centre commercial, à un cinéma, un centre sportif ou n'importe quel autre centre de divertissement lorsqu'il est dans un mode veille.

27. Terminal de paiement selon la revendication 14, **caractérisé en ce que** le commutateur d'accessibilité (19b) du terminal de paiement (1) est configuré pour retirer les publicités affichées sur l'écran (14) dudit terminal de paiement (1).

28. Terminal de paiement (1) selon la revendication 1, **caractérisé en ce que** les moyens de paiement sans contact comprennent au moins une carte à puce ou d'autres dispositifs comprenant un téléphone intelligent et d'autres dispositifs mobiles.

29. Système de paiement **caractérisé en ce qu'**il comprend un terminal selon les revendications 2 à 28 et un boîtier de connecteurs (3) (ITF) coopérant avec ledit terminal (1), ledit boîtier de connecteurs (3) étant configuré pour être logé dans la cavité (102) de la face inférieure dudit terminal (1) et comprenant au moins une prise d'entrée de puissance, un port Ethernet, un port USB et au moins un hôte USB pour permettre audit terminal de paiement (1) de communiquer avec au moins un dispositif configuré sur l'« arborescence matérielle ».

30. Système de paiement portable **caractérisé en ce qu'**il comprend terminal (1) de paiement selon les revendications 3 à 28 et un boîtier de batterie (2) coopérant avec ledit terminal (1) de paiement, ledit boîtier étant configuré pour être logé dans la cavité (102) de la face inférieure dudit terminal de paiement (1) et comprenant au moins une batterie, une prise d'entrée d'alimentation et un dispositif micro USB.

## Patentansprüche

1. Bezahlendgerät (1) mit einem Gehäuse (10), umfassend eine ebene obere Fläche mit einer Ausdehnung an einem Ende (12), die einen Winkel θ₂ zwischen 30 und 50° mit der ebenen Fläche bildet, um eine kontaktlose Lesevorrichtung (121) aufzunehmen, um kontaktlos zu lesen und mit kontaktlosen Zahlungsmitteln zu kommunizieren, wobei das andere Ende der ebenen Fläche einen Magnetstreifenkartenleser (11) umfasst und, in einem Schlitz (13), der sich oberhalb des Magnetstreifenkartenleser (11) befindet und einen Winkel *θ*₁ zwischen 30 und 50° mit der ebenen Fläche bildet, einen kontaktbasierten Chipkartenleser (130) aufnimmt, wobei das Endgerät (1) eine Hauptleiterplatte (1030) umfasst, die wenigstens einen Controller, wenigstens einen Speicher zum Speichern von Daten und/oder von Programmen umfasst, wobei der Controller umfasst: wenigstens einen Prozessor, um die Programme auszuführen, wenn er Anweisungen von dem Speicher des Controllers empfängt, um wenigstens eine Anzeigevorrichtung (14), die eine virtuelle Tastatur anzeigt, zu steuern, Mittel für die Kommunikation über Internet oder über Wi-Fi und eine Funktionalität zum Lesen von kontaktbasierten oder kontaktlosen Karten, wobei das Endgerät (1) **dadurch gekennzeichnet ist, dass** die Hauptleiterplatte (1030), an einem Ende, einen Verbinder für einen kontaktbasierten Kartenleser umfasst, der mit einem Winkel *θ*₁ zwischen 30 und 50° mit der ebenen Oberfläche der Karte orientiert ist, und, an dem anderen Ende, einen flexiblen Verbinder umfasst, um eine drahtgebundene Antenne (120) für eine Funktionalität zum Lesen von kontaktlosen Zahlungsmitteln mit einem Winkel *θ*₂ zwischen 30 und 50° mit der ebenen Oberfläche der Karte zu verbinden.

2. Bezahlendgerät (1) nach Anspruch 1, **dadurch gekennzeichnet, dass** der Speicher der Hauptleiterplatte (1030) ferner wenigstens ein Programm umfasst, dessen Ausführung eine "Gerätebaum"-Funktionalität implementiert, wobei diese Funktionalität die Zuordnung wenigstens einer Anordnung von Vorrichtungen zu dem Endgerät (1) gestattet, wobei die Vorrichtungen durch den Prozessor der Hauptleiterplatte (1030) gesteuert werden.

3. Bezahlendgerät (1) nach Anspruch 1, **dadurch gekennzeichnet, dass** das Gehäuse (10) eine untere Fläche umfasst, die der ebenen oberen Fläche gegenüberliegt und wenigstens umfasst:
• Auflagezonen (104), derart, dass, wenn es auf einem Ladentisch oder einem Schreibtisch angeordnet wird, die Ausdehnung der ebenen oberen Fläche einen Winkel θ₂ zwischen 30 und 50° mit der Oberfläche des Ladentischs oder des Schreibtischs bildet;
• eine Vertiefung (102), wenigstens umfassend:
- eine Anordnung von Buchsen zum Aufstecken des Endgeräts (1) auf eine Ladevorrichtung und/oder eine Steckdose mittels eines Verbinders;
- eine Ethernet-Buchse zum Einstecken wenigstens eines Ethernet-Kabels (1020);
- eine Anordnung von Rückhaltemitteln (1021a, 1021b, 1021c, 1021d, 1021e, 1021f) für die Befestigung des Endgeräts (1) an einem Träger (4) oder die Befestigung wenigstens einer Ladevorrichtung auf dem Endgerät.

4. Bezahlendgerät (1) nach Anspruch 3, **dadurch gekennzeichnet, dass** die Vertiefung (102) der unteren Fläche des Endgeräts umfasst: wenigstens einen Steckplatz für SIM-Karte (1020c) für die drahtlose 4G- und/oder 3G-Verbindung des Bezahlendgeräts mit dem Internet, einen Steckplatz für Micro-SD (1020a), um Daten aufzuzeichnen, und wenigstens einen Steckplatz für Secure Access Modul (SAM) (1020b), um wenigstens eine SAM-Karte aufzunehmen, die den gesicherten Zugang zu der Funktionalität des Bezahlendgeräts (1) verwaltet.

5. Bezahlendgerät (1) nach Anspruch 1, **dadurch gekennzeichnet, dass** die Anzeigevorrichtung (14) ein interaktiver berührungsempfindlicher Bildschirm (14) ist, um wenigstens solche Informationen wie Symbole oder eine Taste anzuzeigen, und eine virtuelle Tastatur umfasst, die einem Benutzer die Eingabe von Informationen oder die Vornahme einer Auswahl eines oder mehrerer Symbole gestattet, um eine Funktionalität oder eine Applikation auszulösen.

6. Bezahlendgerät (1) nach Anspruch 5, **dadurch gekennzeichnet, dass** der interaktive berührungsempfindliche Bildschirm (14) wenigstens einen Lichtsensor für die automatische Anpassung des Kontrasts der Anzeige umfasst.

7. Bezahlendgerät (1) nach Anspruch 5, **dadurch gekennzeichnet, dass** der interaktive berührungsempfindliche Bildschirm (14) wenigstens einen Beschleunigungsmesser für die automatische Orientierung der Benutzerschnittstelle im Landschaftsmodus oder im Portraitmodus in Abhängigkeit von der Orientierung des Bezahlendgeräts (1) umfasst.

8. Bezahlendgerät (1) nach Anspruch 1, **dadurch gekennzeichnet, dass** die ebene obere Fläche wenigstens umfasst:
• eine Kamera (15), um Ereignisse aufzuzeichnen, wenn das Endgerät (1) verwendet wird, wobei die Ereignisse in dem Speicher des Endgeräts (1) gespeichert werden;
• einen Lichtleiter (17), der sich unterhalb des Bildschirms (14) und in der Nähe des Randes der Ausdehnung der ebenen Fläche befindet, für die Erkennung der kontaktlosen Karte.

9. Bezahlendgerät (1) nach Anspruch 8, **dadurch gekennzeichnet, dass** die Kamera (15) eingerichtet ist, um die Aufzeichnung der Ereignisse zu beginnen, wenn ein Benutzer mit dem Bildschirm (14) des Bezahlendgeräts (1) interagiert, wobei die Aufzeichnungsfunktionalität der Kamera (15) automatisch aktiviert wird.

10. Bezahlendgerät (1) nach Anspruch 8 und 9, **dadurch gekennzeichnet, dass** die Kamera (15) eingerichtet ist, um die Aufzeichnung zu beenden, wenn während eines vorbestimmten Zeitraums kein Benutzer mit dem Bildschirm (14) des Bezahlendgeräts (1) interagiert, wobei die Aufzeichnungsfunktionalität automatisch deaktiviert wird.

11. Bezahlendgerät (1) nach Anspruch 8 bis 10, **dadurch gekennzeichnet, dass** die Kamera (15) eingerichtet ist, um die Etiketten oder die QR-Codes, die ein Produkt betreffende Informationen umfassen, über eine Scanner-Funktionalität, die in der Kamera (15) enthalten ist, zu lesen.

12. Bezahlendgerät (1) nach Anspruch 8, **dadurch gekennzeichnet, dass** es eine zweite Kamera umfasst, die sich an dem oberen Ende wenigstens einer seitlichen Fläche des Gehäuses (10) des Bezahlendgeräts (1) oder im Bereich der unteren Fläche des Endgeräts (1) befindet.

13. Bezahlendgerät (1) nach Anspruch 8 bis 12, **dadurch gekennzeichnet, dass** der Speicher des Controllers wenigstens ein Programm umfasst, dessen Ausführung die Implementierung der Funktionalität des Auslösens und des Aufzeichnens der Kamera (15) gestattet.

14. Bezahlendgerät (1) nach Anspruch 1 bis 13, **dadurch gekennzeichnet, dass** das Gehäuse (10) des Bezahlendgeräts (1) ferner wenigstens eine seitliche Fläche mit einem Loch umfasst, das wenigstens eine Buchse für Kopfhörer (19a) für eine Audioführung beim Einstecken eines Kopfhörers und einen Barrierefreiheitsschalter (19b), um wenigstens den Kontrast der Anzeige oder die verwendete Schriftgröße zu ändern, umfasst.

15. Bezahlendgerät (1) nach Anspruch 1, **dadurch gekennzeichnet, dass** das Ende der ebenen Oberfläche, das den Schlitz (13) des Chipkartenlesers umfasst, wenigstens einen Lautsprecher (16) umfasst, um einen Benutzer zu führen.

16. Bezahlendgerät (1) nach Anspruch 14, **dadurch gekennzeichnet, dass** das Gehäuse (10) des Bezahlendgeräts (1), auf einer seitlichen Fläche, die der wenigstens einen seitlichen Fläche mit der Kopfhörerbuchse gegenüberliegt, einen physikalischen Sicherheitsschlitz (18) für die Aufnahme wenigstens eines Riegels umfasst, der das Entfernen einer Komponente des Bezahlendgeräts (1) verhindert.

17. Bezahlendgerät (1) nach Anspruch 1, **dadurch gekennzeichnet, dass** wenigstens eine seitliche Fläche des Gehäuses (10) des Bezahlendgeräts (1) wenigstens einen USB-Port umfasst, der die Verbindung des Endgeräts (1) mit wenigstens einer Computervorrichtung oder einem Smartphone gestattet, wobei die Computervorrichtung wenigstens drahtlose Kommunikationsmittel zum Konfigurieren und Kommunizieren mit dem Bezahlendgerät (1) umfasst.

18. Bezahlendgerät (1) nach Anspruch 17, **dadurch gekennzeichnet, dass** es durch die Computervorrichtung konfiguriert wird oder wenigstens Informationen und/oder Daten, die einem Bezahlvorgang zugeordnet sind, an die Computervorrichtung oder umgekehrt mittels der Verbindung überträgt.

19. Bezahlendgerät (1) nach Anspruch 17 und 18, **dadurch gekennzeichnet, dass** es durch die Computervorrichtung konfiguriert wird, um wenigstens:
• die Programme, welche die Funktionalitäten des Endgeräts (1) implementiert und bereits in dem Speicher der Hauptleiterplatte (1030) enthalten sind, zu verwalten;
• wenigstens ein Set von neuen Programmen in den Speicher hinzuzufügen, deren Ausführungen die Implementierung wenigstens eines Sets von Funktionalitäten zusätzlich zu den vorhergehenden Funktionalitäten des Bezahlendgeräts (1) gestatten.

20. Bezahlendgerät (1) nach Anspruch 1, **dadurch gekennzeichnet, dass** die untere Fläche des Bezahlendgeräts eine Reset-Taste (101) umfasst, um die Konfiguration des Endgeräts (1) zurückzusetzen, wenn das Endgerät nicht einwandfrei funktioniert, wobei eine Bestätigung zum Zurücksetzen auf dem Bildschirm (14) des Endgeräts verlangt wird, wenn die Reset-Taste (101) aktiviert wird, um zu vermeiden, dass die Konfiguration des Endgeräts automatisch zurückgesetzt wird, wenn die Reset-Taste (101)versehentlich aktiviert wird.

21. Bezahlendgerät nach Anspruch 1, **dadurch gekennzeichnet, dass** das Gehäuse (10) des Bezahlendgeräts (1), auf wenigstens einer seiner seitlichen Flächen, einen Steckplatz zum Befestigen eines berührungsempfindlichen Stifts umfasst, wobei der Stift benutzt wird, um mit dem Bildschirm des Bezahlendgeräts (1) zu interagieren.

22. Bezahlendgerät nach Anspruch 1, **dadurch gekennzeichnet, dass** es Befestigungsmittel umfasst, um mit einer Befestigungsplatte zusammenzuwirken, welche die ebene obere Fläche des Endgeräts (1) derart orientiert, dass die Orientierung des Chipkartenlesers (130) dergestalt ist, dass die Karte einen Winkel *θ*₁ bildet:
• der zwischen 30 und 50° gegenüber der Horizontalen beträgt, wenn das Endgerät (1) auf der Befestigungsplatte (5) angeordnet wird, die auf der Oberfläche eines Ladentischs platziert ist;
• der zwischen 30 und 50° gegenüber der Vertikalen beträgt, wenn das Endgerät (1) auf der Befestigungsplatte (5) angeordnet wird, die gegen eine Wand montiert ist.

23. Bezahlendgerät (1) nach Anspruch 1 bis 22, **dadurch gekennzeichnet, dass** es eingerichtet ist, um wenigstens ein Produkt betreffende Informationen aufzuzeichnen, das ein Kunde gewöhnlich kauft, wobei die Informationen in einer gesicherten Datenbank gespeichert sind, mit dem das Endgerät (1) unter Verwendung seiner Kommunikationsmittel kommuniziert.

24. Bezahlendgerät (1) nach Anspruch 1 bis 23, **dadurch gekennzeichnet, dass** es eingerichtet ist, um Informationen anzuzeigen, die in der gesicherten Datenbank gespeichert und einem Produkt zugeordnet sind, wenn das Produkt, das von einem Kunden gekauft wird, nahezu eine Bestandsunterdeckung aufweist.

25. Bezahlendgerät (1) nach Anspruch 1 bis 24, **dadurch gekennzeichnet, dass** es eingerichtet ist, um sich mit der gesicherten Datenbank oder mit dem Internet, über einen gesicherten Zugang, zu verbinden und nach Informationen zu suchen, die Produkte und deren Verfügbarkeit auf den Märkten oder in den Einkaufszentren in der Nähe betreffen, wobei die Informationen auf dem Bildschirm (14) des Endgeräts (1) angezeigt und dem Kunden vorgeschlagen werden.

26. Bezahlendgerät (1) nach Anspruch 1 bis 25, **dadurch gekennzeichnet, dass** es eingerichtet ist, um Werbung anzuzeigen, die einem Einkaufszentrum, einem Kino, einem Sportzentrum oder jedem beliebigen Familienvergnügungszentrum entspricht, wenn es in einem Standby-Betrieb ist.

27. Bezahlendgerät nach Anspruch 14, **dadurch gekennzeichnet, dass** der Barrierefreiheitsschalter (19b) des Bezahlendgeräts (1) ausgebildet ist, um die auf dem Bildschirm (14) des Bezahlendgeräts (1) angezeigte Werbung zu entfernen.

28. Bezahlendgerät (1) nach Anspruch 1, **dadurch gekennzeichnet, dass** die kontaktlosen Zahlungsmittel wenigstens eine Chipkarte oder sonstige Vorrichtungen umfassen, die ein Smartphone und andere mobile Vorrichtungen umfassen.

29. Bezahlsystem, **dadurch gekennzeichnet, dass** es ein Endgerät nach Anspruch 2 bis 28 und ein Steckergehäuse (3) (ITF) umfasst, das mit dem Endgerät (1) zusammenwirkt, wobei das Steckergehäuse (3) ausgebildet ist, um in der Vertiefung (102) der unteren Fläche des Endgeräts (1) aufgenommen zu werden, und wenigstens eine Leistungseinlassbuchse, einen Ethernet-Port, einen USB-Port und wenigstens einen USB-Host umfasst, um dem Bezahlendgerät (1) die Kommunikation mit wenigstens einer Vorrichtung zu gestatten, die im "Gerätebaum" konfiguriert ist.

30. Tragbares Bezahlsystem, **dadurch gekennzeichnet, dass** es ein Bezahlendgerät (1) nach Anspruch 3 bis 28 und ein Batteriegehäuse (2) umfasst, das mit dem Bezahlendgerät (1) zusammenwirkt, wobei das Gehäuse ausgebildet ist, um in der Vertiefung (102) der unteren Fläche des Bezahlendgeräts (1) aufgenommen zu werden, und wenigstens eine Batterie, eine Versorgungseinlassbuchse und eine Micro-USB-Vorrichtung umfasst.

## Claims

1. A payment terminal (1) with a housing (10) comprising a planar upper face with an extension at one end (12) forming an angle *θ*₂. between 30 and 50° with the planar face for receiving a contactless reading device (121) for contactless reading and communicating with contactless payment means, the other end of the planar face comprising a magnetic stripe card reader (11) and receiving, in a slot (13), located above the magnetic stripe card reader (11) and forming an angle *θ*₁ between 30 and 50° with the planar face, a contact chip card reader (130), said terminal (1) comprising a main circuit board (1030) comprising at least a controller, at least a memory for storing data and/or programs, said controller comprising at least a processor for executing said programs when it receives instructions from the memory of the controller in order to control at least a display device (14) displaying a virtual keyboard, means for communicating by Internet or by WiFi, and a functionality of contact or contactless card reading, the terminal (1) being **characterized in that** said main circuit board (1030) comprises, at one end, a connector for a contact card reader oriented with an angle *θ*₁ between 30 and 50° with the planar surface of the card and, at the other end, a flexible connector for connecting a wired antenna (120) for a functionality of reading of contactless payment means with an angle *θ*₂ between 30 and 50° with the planar surface of the card.

2. The payment terminal (1) according to claim 1, **characterized in that** the memory of said main circuit board (1030) also comprises at least a program, the execution of which implements a "device tree" functionality, said functionality allowing the association of at least a set of devices with said terminal (1), said devices being controlled by the processor of said main circuit board (1030).

3. The payment terminal (1) according to claim 1, **characterized in that** said housing (10) comprises a lower face opposite the planar upper face and comprising at least:
• bearing areas (104) in such a way that, when it is disposed on a counter or a desk, the extension of the planar upper face forms an angle *θ*₂ between 30 and 50° with the surface of the counter or the desk;
• a cavity (102) comprising at least:
- a set of sockets for plugging said terminal (1) into a charging device and/or an electrical socket by means of a connector;
- an Ethernet socket for plugging in at least an Ethernet cable (1020);
- a set of retention means (1021a, 1021b, 1021c, 1021d, 1021e, 1021f) for attaching said terminal (1) to a support (4) or attaching at least a charging device to the terminal.

4. The payment terminal (1) according to claim 3, **characterized in that** the cavity (102) of the lower face of said terminal comprises at least a SIM card slot (1020c) for the 4G and/or 3G wireless connection of said payment terminal to the Internet, a micro-SD slot (1020a) for recording data and at least a secure access module (SAM) slot (1020b) for receiving at least a SAM card which manages the secure access to the functionality of said payment terminal (1).

5. The payment terminal (1) according to claim 1, **characterized in that** the display device (14) is an interactive touch-screen (14) for displaying at least information such as icons or a button and comprising a virtual keyboard allowing a user to enter information or to make a selection of one or more icons to trigger a functionality or an application.

6. The payment terminal (1) according to claim 5, **characterized in that** the interactive touch-screen (14) comprises at least a light sensor for the automatic adaptation of the contrast of the display.

7. The payment terminal (1) according to claim 5, **characterized in that** the interactive touch-screen (14) comprises at least an accelerometer for the automatic orientation of the user interface in landscape mode or in portrait mode as a function of the orientation of the payment terminal (1).

8. The payment terminal (1) according to claim 1, **characterized in that** the planar upper face comprises at least:
• . a camera (15) for recording events when the terminal (1) is used, said events being stored in the memory of said terminal (1);
• . a light guide (17) located below the screen (14) and near the edge of the extension of said planar face for detecting the contactless card.

9. The payment terminal (1) according to claim 8, **characterized in that** the camera (15) is adapted for starting to record the events when a user interacts with the screen (14) of said payment terminal (1), the recording functionality of the camera (15) automatically turned on.

10. The payment terminal (1) according to claims 8 and 9, **characterized in that** the camera (15) is adapted for stopping recording when no user interacts with said screen (14) of said payment terminal (1) during a predetermined time, the recording functionality being automatically turned off.

11. The payment terminal (1) according to claims 8 to 10, **characterized in that** said camera (15) is adapted for reading tags or QR codes comprising information concerning a product via a scanning functionality included in said camera (15).

12. The payment terminal (1) according to claim 8, **characterized in that** it comprises a second camera located at the upper end of at least one lateral face of the housing (10) of said payment terminal (1) or at the lower face of said terminal (1).

13. The payment terminal (1) according to claims 8 to 12, **characterized in that** the memory of the controller comprises at least a program, the execution of which enables to implement the functionality of triggering and recording of the camera (15).

14. The payment terminal (1) according to claims 1 to 13, **characterized in that** the housing (10) of the payment terminal (1) also comprises at least one lateral face comprising a hole comprising at least a socket for a headphone (19a) for audio guiding during the plugging-in of a headphone and an accessibility control switch (19b) for increasing at least the contrast of the display or the font size used.

15. The payment terminal (1) according to claim 1, **characterized in that** the end of said planar surface, comprising the slot (13) of the chip card reader, comprises at least a speaker (16) for guiding a user.

16. The payment terminal (1) according to claim 14, **characterized in that** the housing (10) of the payment terminal (1) comprises, on a lateral face opposite said at least one lateral face comprising the headphone socket, a physical safety slot (18) for receiving at least a lock which prevents the removal of a component of said payment terminal (1).

17. The payment terminal (1) according to claim 1, **characterized in that** at least one lateral face of the housing (10) of said payment terminal (1) comprises at least a USB port allowing the connection of said terminal (1) to at least a computer device or a smartphone, said computer device comprising at least wireless communicating means for configuring and communicating with the payment terminal (1).

18. The payment terminal (1) according to claim 17, **characterized in that** it is configured by said computer device or transfers at least information and/or data associated with a payment process to said computer device or vice versa by means of the connection.

19. The payment terminal (1) according to claims 17 and 18, **characterized in that** it is configured by the computer device to at least:
• manage the programs implementing the functionalities of said terminal (1) and already contained in the memory of the main circuit board (1030);
• add at least a set of new programs into said memory, the executions of which allow the implementation of at least a set of functionalities additional to the preceding functionalities of said payment terminal (1).

20. The payment terminal (1) according to claim 1, **characterized in that** the lower face of the payment terminal comprises a reset button (101) for resetting the configuration of the terminal (1), when said terminal is malfunctioning, a reset confirmation being requested on the screen (14) of said terminal, when said reset button (101) is enabled, in order to avoid the configuration of the terminal being automatically reset if said reset button (101) is accidentally enabled.

21. The payment terminal (1) according to claim 1, **characterized in that** the housing (10) of the payment terminal (1) comprises, on at least one of its lateral faces, a location for attaching a touch-sensitive pen, said pen being used to interact with the screen of said payment terminal (1).

22. The payment terminal (1) according to claim 1, **characterized in that** it comprises attaching means for cooperating with an attachment plate orienting the planar upper face of the terminal (1) in such a way that the orientation of the chip card reader (130) is such that said card forms an angle *θ*₁ :
• between 30 and 50° with respect to the horizontal, if said terminal (1) is disposed on the attachment plate (5) placed on the surface of a counter;
• between 30 and 50° with respect to the vertical, if said terminal (1) is disposed on the attachment plate (5) mounted against a wall.

23. The payment terminal (1) according to claims 1 to 22, **characterized in that** it is adapted for recording information concerning at least one product that a customer usually purchases, said information being stored in a secure database with which said terminal (1) communicates using its communicating means.

24. The payment terminal (1) according to claims 1 to 23, **characterized in that** it is adapted for displaying information stored in the secure database and associated with a product when said product purchased by a customer is nearly out of stock.

25. The payment terminal (1) according to claims 1 to 24, **characterized in that** it is adapted for connecting to the secure database or to the Internet, by a secure access, and searching for information concerning products and their availability on markets or in shopping centers in the neighborhood, said information being displayed on the screen (14) of said terminal (1) and suggested to the customer.

26. The payment terminal (1) according to claims 1 to 25, **characterized in that** it is adapted for displaying advertisements for a shopping center, to a cinema, a sports center or any other entertainment center when it is in standby mode.

27. The payment terminal (1) according to claim 14, **characterized in that** the accessibility control switch (19b) of the payment terminal (1) is configured to remove the advertisements displayed on the screen (14) of said payment terminal (1).

28. The payment terminal (1) according to claim 1, **characterized in that** the contactless payment means comprise at least a chip card or other devices comprising a smartphone or other mobile devices.

29. A payment system **characterized in that** it comprises a terminal (1) according to claims 2 to 28 and a connector housing (3) (ITF) cooperating with said terminal (1), said connector housing (3) being configured to be housed in the cavity (102) of the lower face of said terminal (1) and comprising at least an electrical power inlet socket, an Ethernet port, a USB port and at least a USB host to allow said payment terminal (1) to communicate with at least a device configured on the "device tree".

30. A portable payment system **characterized in that** it comprises a payment terminal (1) according to claims 3 to 28 and a battery housing (2) cooperating with said payment terminal (1), said housing being configured to be housed in the cavity (102) of the lower face of said payment terminal (1) and comprising at least a battery, a power supply inlet socket and a micro USB device.
